# EUROPÄISCHE PATENTSCHRIFT

(11) **EP 4 699 739 B1**
(45) Veröffentlichungstag und Bekanntmachung des Hinweises auf die Patenterteilung: **22.07.2026**
(21) Anmeldenummer: 24196327.1
(22) Anmeldetag: 24.08.2024
(51) Int. Cl.: B23Q 1/00

(54) **BEFESTIGUNGSEINRICHTUNG FÜR EINE BEFESTIGUNGSVORRICHTUNG ZUM FESTLEGEN EINES ABLAGEKÖRPERS AN EINER ABLAGEEINRICHTUNG**
FASTENING DEVICE FOR A FASTENING DEVICE FOR FIXING A STORAGE BODY TO A STORAGE DEVICE
DISPOSITIF DE FIXATION POUR UN DISPOSITIF DE FIXATION POUR FIXER UN CORPS DE RANGEMENT À UN DISPOSITIF DE RANGEMENT

(43) Veröffentlichungstag der Anmeldung: 25.02.2026
(73) Patentinhaber: Schwäbische Werkzeugmaschinen GmbH, 78713 Schramberg-Waldmössingen (DE)
(72) Erfinder: Fontaine, Thomas, 78078 Niedereschach (DE); Marmol, Damian, 33-395 Chelmiec (PL); Gao, Jianjun, Suzhou, 215126 (CN)
(74) Vertreter: Schorr, Peter Karl

(56) Entgegenhaltungen:
- EP-B1- 3 219 435
- DE-A1- 10 317 342

## Beschreibung

Die Erfindung betrifft eine Befestigungseinrichtung für eine Befestigungsvorrichtung zum Festlegen eines Ablagekörpers an einer Ablageeinrichtung.

Befestigungseinrichtungen für eine Befestigungsvorrichtung zum Festlegen eines Ablagekörpers an einer Ablageeinrichtung sind in unterschiedlichen Bauformen aus dem Stand der Technik bekannt. Bei diesen wird auf einer tisch- oder plattenartigen Ablageeinrichtung ein Ablagekörper, wie Bauteil, Werkstück oder Baugruppe, abgelegt und durch die Befestigungseinrichtung gegenüber der Ablageeinrichtung klemmend festgelegt. Die Ablageeinrichtung weist hierzu Haltebolzen auf, die an der Ablageeinrichtung festgelegt sind und die aus einer Ablagefläche hervorragen. Die Befestigungseinrichtung wird solchenfalls auf die Haltebolzen aufgesetzt und mittels einer Festlegeeinheit mit dem Haltebolzen verspannt. Es ist eine Befestigungseinrichtung für eine Befestigungsvorrichtung zum Festlegen eines Ablagekörpers an einer Ablageeinrichtung aus dem Patentdokument DE 103 17 342 A1 bekannt.

Bei den bekannten Befestigungseinrichtungen ist die Position, an der die Befestigungseinrichtung an der Ablageeinrichtung an dem dort heraus hervorragenden Bolzen festgelegt ist, durch die Position des Haltebolzens vorbestimmt. Das Anordnen von Haltebolzen an der Ablageeinrichtung ist an gleichmäßig, insbesondere gitterartig, verteilten Aufnahmen an der Ablagefläche der Ablageeinrichtung ermöglicht. Diese Aufnahmen weisen zueinander einen Mindestabstand auf, der die Platzierungsmöglichkeiten der Befestigungseinrichtungen definiert.

Bei den bekannten Befestigungseinrichtungen hat es sich als nachteilig herausgestellt, dass ein Anordnen von Befestigungseinrichtungen durch die Positionen der Haltebolzen definiert ist und bestimmte Positionen durch die Befestigungseinrichtung an der Ablagefläche nicht einnehmbar sind.

Eine Aufgabe eines Ausführungsbeispiels der Erfindung ist, eine Befestigungseinrichtung für eine Befestigungsvorrichtung zum Festlegen eines Ablagekörpers an einer Ablageeinrichtung vorzuschlagen, bei der ein Platzieren der Befestigungseinrichtung einen größeren Spielraum umfasst.

Diese Aufgabe wird gelöst durch eine Befestigungseinrichtung für eine Befestigungsvorrichtung zum Festlegen eines Ablagekörpers an einer Ablageeinrichtung, die eine Ablagefläche und mindestens einen aus der Ablagefläche hervorragenden Haltebolzen aufweist, mit mindestens einem gehäuseartigen Rahmenmittel, das einen Hohlraum, das eine Öffnung, durch die der Hohlraum von außen zugänglich ist, das eine Anlagefläche, mit der das Rahmenmittel an der Ablagefläche der Ablageeinrichtung berührend anordenbar ist, und das auf der der Öffnung gegenüberliegenden Seite eine durchgehende Aussparung umfasst, durch die der Hohlraum von außen zugänglich ist, mit mindestens einer im Hohlraum angeordneten Festlegeeinheit, durch die ein durch die Öffnung erstreckter, im Hohlraum des Rahmenmittels angeordneter Haltebolzen relativ zum Rahmenmittel ortsfest festlegbar ist, mit mindestens einem Deckelmittel, das auf der der Öffnung abgewandten Seite des Rahmenmittels die Aussparung verschließend am Rahmenmittel festgelegt ist, und mit mindestens einer ersten Führungseinheit, die zwischen dem Deckelmittel und der Festlegeeinheit ausgebildet ist und durch die die Festlegeeinheit parallel zur Anlagefläche im Hohlraum des Rahmenmittels entlang einer ersten Führungsrichtung bewegbar ist.

Dadurch, dass die Befestigungseinrichtung eine Festlegeeinheit umfasst, mit der die Befestigungseinrichtung an einem Haltebolzen festlegbar ist und dadurch, dass die Festlegeeinheit innerhalb der Befestigungseinrichtung durch die erste Führungseinheit entlang einer ersten Führungsrichtung bewegbar ist, kann die Befestigungseinrichtung relativ zum Haltebolzen zumindest entlang der ersten Führungsrichtung verschoben werden und hierdurch in unterschiedlichen Positionen bezüglich der ersten Führungsrichtung am Haltebolzen und hierdurch an der Ablagefläche der Ablageeinrichtung festgelegt werden.

Hierdurch sind die durch die Befestigungseinrichtung einnehmbaren Positionen auf der Ablagefläche der Ablageeinrichtung erweitert und ein Festlegen von Ablagekörpern durch die verbesserte Einstellbarkeit der Befestigungseinrichtung verbessert.

Dadurch, dass das Rahmenmittel eine Öffnung umfasst, ist durch diese auf einfache Weise ein Haltebolzen der Ablageeinrichtung hindurchsteckbar, und an die Festlegeeinheit gelangbar.

Dadurch, dass das Rahmenmittel auf der der Öffnung abgewandten Seite eine durchgehende Aussparung umfasst, die durch das Deckelmittel verschlossen wird, ist die Festlegeeinheit gemeinsam mit dem Deckelmittel auf einfache Weise in, bzw. an dem Rahmenmittel anordenbar und festlegbar.

Die erste Führungseinheit kann grundsätzlich beliebig ausgebildet sein, sofern sie der technischen Funktion nachkommt, dass die Festlegeeinheit relativ zum Deckelmittel entlang der ersten Führungsrichtung bewegbar ist. Bei einer Ausführungsform der Befestigungseinrichtung erweist es sich als vorteilhaft, wenn die erste Führungseinheit mindestens einen Vorsprung am Deckelmittel oder an der Festlegeeinheit umfasst, der quer zur ersten Führungsrichtung einen sich erweiternden Querschnitt umfasst und der in eine korrespondierend, insbesondere komplementär, ausgebildete nutartige Vertiefung der Festlegeeinheit, bzw. des Deckelmittels eingreift.

Der mindestens eine Vorsprung kann solchenfalls schwalbenschwanzartig ausgebildet sein und die Ausnehmung entsprechend korrespondierend einen schwalbenschwanzartigen Querschnitt umfassen.

Der Begriff "beziehungsweise" wird vorliegend nicht als "oder" verwendet, sondern in seinem ursprünglichen Wortsinn mit der Bedeutung "und im anderen Fall".

Die Führungseinheit kann bei einer Weiterbildung mindestens zwei Vorsprünge und mindestens zwei Ausnehmungen umfassen.

Um das Spiel zwischen dem Vorsprung und der Aussparung so gering als möglich zu belassen, erweist es sich als vorteilhaft, wenn die erste Führungseinheit mindestens ein Spannmittel umfasst, das zwischen Deckelmittel und Festlegeeinheit angeordnet ist und durch das Deckelmittel und Festlegeeinheit voneinander weg spannbar sind.

Hierdurch werden Vorsprung und Aussparung derart aufeinander zubewegt, dass diese stets flächenhaft aneinander anliegen.

Um ein Bewegen der Festlegeeinheit als Ganzes entlang der ersten Führungsrichtung auf einfache Weise zu gewährleisten, erweist es sich als vorteilhaft, wenn die Festlegeeinheit einen Gehäusekörper umfasst, an dessen dem Deckelmittel zugewandten Seite die erste Führungseinheit, insbesondere die nutartige Vertiefung, bzw. der Vorsprung, ausgebildet ist und der auf der dem Deckelmittel abgewandten Seite eine Gehäuseöffnung aufweist, durch die ein Gehäusehohlraum von außen zugänglich ist.

Dadurch, dass die Festlegeeinheit einen Gehäusekörper umfasst, der auf der dem Deckelmittel abgewandten Seite eine Gehäuseöffnung aufweist, durch die ein Gehäusehohlraum von außen zugänglich ist, kann ein Haltebolzen zum Festlegen in der Festlegestellung durch die Gehäuseöffnung hindurchgesteckt werden, um mit der Festlegeeinheit gekoppelt zu werden. Der Gehäusekörper der Festlegeeinheit hat in Richtung parallel zur ersten Führungsrichtung eine kleinere Erstreckung, also geringere Abmaße, als der Hohlraum des Rahmenmittels. Hierdurch ist eine Relativbewegung der Festlegeeinheit, insbesondere des Gehäusekörpers der Festlegeeinheit, im Hohlraum des Rahmenmittels entlang der ersten Führungsrichtung ermöglicht.

Bei einer Weiterbildung letztgenannter Ausführungsform erweist es sich als vorteilhaft, wenn die Festlegeeinheit mindestens zwei Klemmmittel und mindestens ein von außerhalb des Rahmenmittels betätigbares Betätigungsmittel umfasst, die im Gehäusehohlraum des Gehäusekörpers angeordnet sind, wobei durch das Betätigungsmittel die mindestens zwei Klemmmittel entlang einer Betätigungsrichtung auf einander zu oder voneinander weg relativ zueinander bewegbar und von einer Festlegestellung, in der die Klemmmittel einen durch die Öffnung erstreckten, im Hohlraum des Rahmenmittels angeordneten Haltebolzen der Ablageeinrichtung gegen ein Relativbewegen quer zur Betätigungsrichtung festgelegen, in einer Freigabestellung überführbar sind, in der der Haltebolzen zum Bewegen quer oder schräg zur Betätigungsrichtung freigegeben ist.

Dadurch, dass die Festlegeeinheit zwei Klemmmittel umfasst, die entlang einer Betätigungsrichtung aufeinander zu oder voneinander weg relativ zueinander bewegbar sind, ist ein Festlegen und wieder Freigeben des Haltebolzens auf einfache Weise ermöglicht.

Das Betätigungsmittel kann durch eine Bedienperson manuell betätigbar sein oder durch einen Manipulator, wie Roboter, betätigt werden.

Die Relativbewegung zwischen den mindestens zwei Klemmmitteln kann grundsätzlich beliebig realisiert sein, sofern die Klemmmittel der Funktion nachkommen, den Haltebolzen in der Festlegestellung gegen ein Bewegen quer zur Betätigungsrichtung festzulegen und durch Überführen in die Freigabestellung zu einem Bewegen quer oder schräg zur Betätigungsrichtung freizugeben.

Hierbei kann der Bewegungsspielraum zwischen zwei Klemmmitteln mindestens 3 mm, insbesondere mindestens 5 mm, mindestens 10 mm, umfassen.

Um ein Anordnen des Haltebolzens innerhalb des Gehäusehohlraums und hierdurch unter Zugriff der mindestens zwei Klemmmittel anzuordnen, erweist es sich als vorteilhaft, wenn die Gehäuseöffnung im Gehäusekörper einen sich von außen in Richtung Klemmmittel verjüngenden Querschnitt umfasst, der an seiner engsten Stelle zumindest einen Querschnitt umfasst, der korrespondierend, insbesondere komplementär, zum Querschnitt des Haltebolzens ausgebildet ist.

Hierdurch bildet die Gehäuseöffnung eine Art Einlauf, die die Festlegeeinheit bezüglich des Haltebolzens zentriert. Hierdurch kann ein sicheres Greifen und Festlegen des Haltebolzens durch die mindestens zwei Klemmmittel gewährleistet werden.

Grundsätzlich ist es denkbar, dass der Haltebolzen durch die mindestens zwei Klemmmittel kraftschlüssig festgelegt wird. Ergänzend oder alternativ hierzu kann vorgesehen sein, dass mindestens einer der mindestens zwei Klemmmittel einen, insbesondere in, schräg oder quer zur Betätigungsrichtung erstreckten, keilartigen Spannabschnitt umfasst, der in der Festlegestellung in einen korrespondierend, insbesondere komplementär, ausgebildeten Hintergriffabschnitt des Haltebolzens eingreift und der den Haltebolzen beim Betätigen in Betätigungsrichtung quer zur Betätigungsrichtung in Richtung Rahmenmittel spannt und in der Festlegestellung mit dem Haltebolzen einen Hintergriff quer zur Betätigungsrichtung bildet.

Durch den in Betätigungsrichtung erstreckten, keilartigen Spannabschnitt, kann beim Aufeinanderzubewegen der zwei Klemmmittel der Haltebolzen über die Schräge des keilartigen Spannabschnitts weiter in Richtung Rahmenmittel gezogen werden oder das Rahmenmittel mit einer erhöhten Anpresskraft in Richtung Ablagefläche der Ablageeinrichtung mit erhöhter Anpresskraft beaufschlagt werden. Hierdurch umfasst die Festlegeeinheit gleichzeitig die Funktion eines Festspannens in der Festlegestellung.

Um ein manuelles oder durch einen Manipulator erfolgendes Betätigen des Betätigungsmittels zu gewährleisten, erweist es sich als vorteilhaft, wenn das Betätigungsmittel ein Betätigungselement umfasst, das in Gänze oder zumindest abschnittsweise in Richtung parallel zur Betätigungsrichtung durch eine Durchbrechung im Rahmenmittel aus dem Rahmenmittel herausragt und gegen ein Bewegen parallel zur Betätigungsrichtung festgelegt und von außen um eine parallel zur Betätigungsrichtung verlaufende Drehachse drehbar betätigbar ist und/oder wenn das Betätigungsmittel ein Übertragungselement umfasst, das durch die Klemmmittel durcherstreckt ist und durch das eine Drehbewegung des Betätigungselement in eine Translationsbewegung der Klemmmittel wandelbar ist.

Dadurch, dass das Betätigungsmittel mit einem Betätigungselement aus dem Rahmenmittel herausragt, ist das Betätigungsmittel auf einfache Weise von außen betätigbar. Dadurch, dass das Betätigungselement gegen ein Bewegen parallel zur Betätigungsrichtung festgelegt ist, kann vermieden werden, dass das Betätigungselement des Betätigungsmittels an eine schwer erreichbare Stelle verschoben wird.

Dadurch, dass das Betätigungsmittel ein Übertragungselement umfasst, das durch die Klemmmittel durcherstreckt ist und durch das eine Drehbewegung des Betätigungselements in eine Translationsbewegung der Klemmmittel wandelbar ist, können die Klemmmittel durch manuelles oder Manipulator durchgeführtes Drehen des Betätigungselements durch die Translationsbewegung, die parallel zur Betätigungsrichtung erfolgt, aufeinander zu oder voneinander wegbewegt werden.

Das Übertragungselement kann mittelbar oder unmittelbar am Klemmmittel anliegen.

Die Durchbrechung im Rahmenmittel, durch die das Betätigungsmittel mit dem Betätigungselement durcherstreckt ist, kann schlitzartig ausgebildet sein, um ein Bewegen der Festlegeeinheit parallel zur ersten Führungsrichtung freizugeben.

Um die Einstellbarkeit der Befestigungseinrichtung weiter zu verbessern, insbesondere, um die Befestigungseinrichtung an der Ablagefläche der Ablageeinrichtung mit mehr Freiraum anordnen und festlegen zu können, erweist es sich als vorteilhaft, wenn das Betätigungsmittel ein Gleitelement umfasst mit dem das Betätigungsmittel parallel zur Betätigungsrichtung relativ zum Betätigungselement und/oder mit dem die Klemmmittel relativ zum Betätigungsmittel bewegbar ist, wobei das Gleitelement des Betätigungsmittels und die mindestens zwei Klemmmittel eine zweite Führungseinheit bilden durch die zumindest die mindestens zwei Klemmmittel zumindest in der Freigabestellung parallel quer zur Betätigungsrichtung im Gehäusekörper entlang einer zweiten Führungsrichtung bewegbar sind.

Dadurch, dass das Betätigungsmittel ein Gleitelement umfasst, können die Klemmmittel entlang einer zweiten Führungsrichtung bewegt werden. Die zweite Führungsrichtung ist quer zur ersten Führungsrichtung erstreckt und ermöglicht ein Bewegen der mindestens zwei Klemmmittel innerhalb des Gehäusehohlraums.

Es erweist sich als vorteilhaft, wenn das Gleitelement quer zur Betätigungsrichtung einen mehreckigen Querschnitt, insbesondere einen viereckigen, sechseckigen oder achteckigen Querschnitt, umfasst und wenn das Übertragungselement einen Außengewindeabschnitt und jedes Klemmmittel einen mit dem Außengewindeabschnitt zusammenwirkenden Innengewindeabschnitt umfasst.

Wenn das Gleitelement quer zur Betätigungsrichtung einen mehreckigen Querschnitt umfasst, können beispielsweise Drehbewegungen von dem Betätigungselement über das Gleitelement auf das Übertragungselement übertragen werden. Solchenfalls können Gleitelement und Betätigungselement zwei separate oder voneinander separierbare Bauteile umfassen und/oder Gleitelement und Übertragungselement zwei voneinander separate oder separierbare Bauteile umfassen. Das Gleitelement ist solchenfalls durch das Betätigungselement, bzw. das Übertragungselement durch eine korrespondierend ausgebildete Öffnung durcherstreckt, wodurch bei einer Drehbewegung diese auf das jeweils angrenzende Bauteil übertragen wird und ein bei einer Translationsbewegung das Gleitelement im Wesentlichen ohne Übertragung von Kräften, parallel zur Betätigungsrichtung gleiten kann.

Wenn das Übertragungselement ein Außengewindeabschnitt und jedes Klemmmittel eine mit dem Außengewindeabschnitt zusammenwirkenden Innengewindeabschnitt umfasst, kann auf einfache Weise eine Rotationsbewegung des Übertragungselements, beispielsweise durch Betätigen des Betätigungselements, in eine Translationsbewegung der Klemmmittel, insbesondere parallel zur Betätigungsrichtung, umgewandelt werden.

Bei einer Weiterbildung letztgenannter Ausführungsform erweist es sich als vorteilhaft, wenn das Betätigungselement und das Gleitelement des Betätigungsmittels ein gemeinsames einstückiges Bauteil bilden und/oder wenn das Gleitelement und das mindestens eine Übertragungselement voneinander separate oder separierbares Bauteile umfassen, wobei das Gleitelement mit einem einen mehreckigen Querschnitt umfassenden Gleitabschnitt in einer korrespondierend, insbesondere komplementär, ausgebildeten durchgehenden Ausnehmung im Übertragungselement angeordnet und entlang der zweiten Führungsrichtung relativ zum Übertragungselement bewegbar ist.

Wenn das Betätigungselement und das Gleitelement des Betätigungsmittels ein gemeinsames einstückiges Bauteil bilden, kann das Gleitelement als ein Gleitabschnitt dieses Bauteils ausgebildet sein und das Betätigungselement durch einen von außen betätigbaren Betätigungsabschnitt.

Dadurch, dass Gleitelement und das mindestens eine Übertragungselement voneinander separierbare Bauteile umfassen, ist das Gleitelement, insbesondere das gemeinsame Bauteil, gebildet aus Betätigungselement und Gleitelement, mit dem Gleitelement, insbesondere dem Gleitabschnitt, zumindest abschnittsweise innerhalb des Übertragungselements angeordnet. Das Übertragungselement umfasst seinerseits dann den Außengewindeabschnitt. Aufgrund des mehreckigen Querschnitts des innerhalb des Übertragungselements angeordneten Gleitelements wird eine Drehbewegung am Betätigungselement auf das Übertragungselement übertragen und von dort aufgrund des Außengewindeabschnitts in eine Translationsbewegung der Klemmmittel umgewandelt.

Alternativ oder ergänzend hierzu kann vorgesehen sein, dass das Betätigungselement und das Gleitelement des Betätigungsmittels voneinander separate oder separierbare Bauteile umfassen, wobei das Gleitelement mit einem einen mehreckigen Querschnitt umfassenden Gleitabschnitt in einer korrespondierend, insbesondere komplementär, ausgebildeten durchgehenden Ausnehmung im Betätigungselement angeordnet und entlang der zweiten Führungsrichtung relativ zum Betätigungselement bewegbar ist und/oder dass das Gleitelement und das mindestens eine Übertragungselement ein gemeinsames Bauteil bilden.

Wenn das Betätigungselement und das Gleitelement des Betätigungsmittels voneinander separate oder separierbare Bauteile umfassen, wird beim Bewegen der Klemmmittel das Gleitelement gemeinsam mit dem Klemmmittel bewegt.

Wenn das Gleitelement und das Übertragungselement ein gemeinsames einstückiges Bauteil bilden, kann das Übertragungselement durch einen Übertragungsabschnitt gebildet sein, bei dem das gemeinsame Bauteil den Außengewindeabschnitt umfasst. Das Gleitelement kann bei dem gemeinsamen Bauteil als Gleitabschnitt ausgebildet sein, der den mehreckigen Querschnitt aufweist.

Um Rahmenmittel und Deckelmittel seitlich zu überfangen, ist bei einer Ausführungsform der Befestigungseinrichtung mindestens ein plattenartiges Wandelement vorgesehen, das auf der die Durchbrechung umfassenden Seite des Rahmenmittels am Rahmenmittel und am Deckelmittel festgelegt ist, und das eine durchgehende Wandöffnung umfasst, die mit der Durchbrechung im Rahmenmittel fluchtet und die durch das Betätigungselement des Betätigungsmittels hindurcherstreckt und von außen betätigbar ist.

Die durchgehende Wandöffnung ist insbesondere korrespondierend zur Durchbrechung im Rahmenmittel ausgebildet. Beide können schlitzartig ausgebildet sein und eine Relativbewegung der Festlegeeinheit entlang der ersten Führungsrichtung ermöglichen.

Bei einer Weiterbildung letztgenannter Ausführungsform umfasst die Befestigungseinrichtung zusätzlich ein bolzen- oder schraubenförmiges Ausrichtemittel, das im Deckelmittel festgelegt ist, das in der Wandöffnung oder durch die Wandöffnung nach außen erstreckt ist und durch das eine Null-Lage der Festlegeeinheit einstellbar ist, und durch ein scheibenförmiges Verschlusselement durch das das Betätigungselement durch eine korrespondierend, insbesondere komplementär, ausgebildete Verschlusselementöffnung durcherstreckt ist, das die Wandöffnung des Wandelements und die Durchbrechung des Rahmenmittels in Gänze verdeckt, und das schwimmend um das Ausrichtemittel drehbar gelagert ist und ein zumindest Bewegen des Betätigungselements entlang der ersten Führungsrichtung freigibt.

Durch das Ausrichtemittel und durch das Verschlusselement, das schwimmend am Ausrichtemittel drehbar gelagert ist, ist eine NullAusrichtung der Befestigungseinrichtung einstellbar und durch das Wandelement ein Eindringen von Schmutz oder Feuchtigkeit in den Gehäusehohlraum oder in den Hohlraum des Rahmenmittels in der festgelegten Anordnung der Befestigungseinrichtung zumindest reduziert. Die schwimmende Lagerung des Wandelements um das Ausrichtemittel kann beispielsweise durch eine verrundete Aussparung am Umfang des Wandelements vorgesehen sein.

Schließlich erweist es sich als vorteilhaft, wenn das Wandelement mindestens eine Elektronikelementaufnahme umfasst, in der oder an der ein Elektronikelement, wie Datenträger, Sensor, Chip, insbesondere RFID- Chip, anordenbar ist.

Durch die Elektronikelementaufnahme kann beispielsweise ein Datenträger, Sensor, Chip, insbesondere RFID-Chip, an der Befestigungseinrichtung festgelegt werden. Hierdurch ist es ermöglicht, die Befestigungseinrichtung zu erfassen und zu verwalten.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Befestigungseinrichtung.

In der Zeichnung zeigt:
- Figur 1: Eine geschnittene Seitenansicht auf ein erstes Ausführungsbeispiel der Befestigungseinrichtung;
- Figur 2: Eine perspektivische, teilgeschnittene Darstellung eines zweiten Ausführungsbeispiels der Befestigungseinrichtung;
- Figur 3: Eine Detailansicht eines Bereichs der Festlegeeinheit des zweiten Ausführungsbeispiels der Befestigungseinrichtung gemäß Figur 2.

Die Figuren zeigen zwei Ausführungsbeispiele einer insgesamt mit dem Bezugszeichen 2 versehenen Befestigungseinrichtung für eine Befestigungsvorrichtung zum Festlegen eines Ablagekörpers an einer Ablageeinrichtung 4.

Die Ablageeinrichtung 4 umfasst eine Ablagefläche 6 und mindestens einen aus der Ablagefläche 6 hervorragenden Haltebolzen 8.

Die Befestigungseinrichtung 2 umfasst ein gehäuseartiges Rahmenmittel 10, das einen Hohlraum 12, das eine Öffnung 14, durch die der Hohlraum 12 von außen zugänglich ist, das eine Anlagefläche 16, mit der das Rahmenmittel 10 an der Ablagefläche 6 der Ablageeinrichtung 4 berührend anordenbar ist und das auf der der Öffnung 14 gegenüberliegenden Seite eine durchgehende Aussparung 18 umfasst.

Darüber hinaus umfasst die Befestigungseinrichtung 2 mindestens eine im Hohlraum 12 des Rahmenmittels 10 angeordnete Festlegeeinheit 20. Durch die Festlegeeinheit 20 ist ein durch die Öffnung 14 erstreckter, im Hohlraum 12 des Rahmenmittels 10 angeordneter Haltebolzen 8 der Ablageeinrichtung 4 relativ zum Rahmenmittel 10 festlegbar.

Ferner umfasst die Befestigungseinrichtung 2 ein Deckelmittel 22, das auf der der Öffnung 14 abgewandten Seite des Rahmenmittels 10 am Rahmenmittel 10 festgelegt ist. Durch das Deckelmittel 22 ist die Aussparung 18 des Rahmenmittels 10 in Gänze verschlossen.

Darüber hinaus umfasst die Befestigungseinrichtung 2 eine erste Führungseinheit 24, die zwischen dem Deckelmittel 22 und der Festlegeeinheit 20 ausgebildet ist. Durch die erste Führungseinheit 24 ist die Festlegeeinheit 20 entlang einer ersten Führungsrichtung 26 relativ zum Deckelmittel 22 innerhalb des Hohlraums 12 des Rahmenmittels 10 bewegbar.

Im Nachfolgenden werden die gemeinsamen Merkmale der Befestigungseinrichtung 2 der in den Figuren gezeigten Ausführungsbeispielen beschrieben:
Die erste Führungseinheit 24 umfasst bei den in den Figuren gezeigten Ausführungsbeispielen einen Vorsprung 28 am Deckelmittel 22 und eine korrespondierend, insbesondere komplementär ausgebildete, nutartige Vertiefung 30 in der Festlegeeinheit 20. Vorsprung 28 und Vertiefung 30 umfassen bezüglich der ersten Führungsrichtung 26 einen schwalbenschwanzartigen Querschnitt.

Um den Vorsprung 28 und die nutartige Vertiefung 30 der ersten Führungseinheit 24 stets auf Flächenkontakt zu halten, umfasst die erste Führungseinheit 24 ein Spannmittel 32, das zwischen dem Deckelmittel 22 und der Festlegeeinheit 20 angeordnet ist und durch das das Deckelmittel 22 und die Festlegeeinheit 20 voneinander weg spannbar sind.

Bei den in den Figuren gezeigten Ausführungsbeispielen umfasst die Festlegeeinheit 20 einen Gehäusekörper 34, an dessen dem Deckelmittel 22 zugewandter Seite die erste Führungseinheit 24, insbesondere die nutartige Vertiefung 30, ausgebildet ist. Auf der dem Deckelmittel 22 abgewandten Seite umfasst der Gehäusekörper 34 eine Gehäuseöffnung 36, durch die ein Gehäusehohlraum 38 von außen zugänglich ist.

Darüber hinaus umfasst die Festlegeeinheit 20 zwei Klemmmittel 40 und mindestens ein von außerhalb des Rahmenmittels 10 betätigbares Betätigungsmittel 42. Die Klemmmittel 40 und das Betätigungsmittel 42 sind zumindest abschnittsweise im Gehäusehohlraum 38 angeordnet, wobei durch das Betätigungsmittel 42 die beiden Klemmmittel 40 entlang einer Betätigungsrichtung 44 aufeinander zu oder voneinander weg relativ zueinander bewegbar sind. Hierbei sind die beiden Klemmmittel 40 von einer Festlegestellung, in der die Klemmmittel 40 einen durch die Öffnung 14 erstreckten, im Hohlraum 12 des Rahmenmittels 10 angeordneten Haltebolzen 8 der Ablageeinrichtung 4 gegen ein Relativbewegen quer zur Betätigungsrichtung 44 festgelegt ist, in eine Freigabestellung überführbar sind, in der der Haltebolzen 8 zum Bewegen quer oder schräg zur Betätigungsrichtung 44 freigegeben ist.

Die Betätigungsrichtung 44 verläuft parallel zur Anlagefläche 16 des Rahmenmittels 10 und quer zur ersten Führungsrichtung 26.

Die Klemmmittel 40 umfassen jeweils einen, insbesondere in, schräg oder quer zur Betätigungsrichtung 44 erstreckten, keilartigen Spannabschnitt 46, der in der Festlegestellung in einem korrespondierend, insbesondere komplementär, ausgebildeten Hintergriffabschnitt 48 des Haltebolzens 8 eingreift und der den Haltebolzen 8 beim Betätigen in Betätigungsrichtung 44 quer zur Betätigungsrichtung 44 in Richtung Rahmenmittel 10 spannt. In der Festlegestellung bilden Spannabschnitt 46 und Hintergriffabschnitt 48 einen Hintergriff quer zur Betätigungsrichtung 44.

Das Betätigungsmittel 42 der Festlegeeinheit 20 umfasst einen Betätigungselement 50, das in Gänze oder zumindest abschnittsweise in Richtung parallel zur Betätigungsrichtung 44 durch eine Durchbrechung 52 im Rahmenmittel 10 aus dem Rahmenmittel 10 herausragt und gegen ein Bewegen parallel zur Betätigungsrichtung 44 festgelegt und von außen um eine parallel zur Betätigungsrichtung 44 verlaufende Drehachse drehbar betätigbar ist. Darüber hinaus umfasst das Betätigungsmittel 42 ein Übertragungselement 54, das durch die Klemmmittel 40 durcherstreckt ist. Durch das Übertragungselement 54 ist eine Drehbewegung des Betätigungselements 50 in eine Translationsbewegung der Klemmmittel 40 wandelbar.

Darüber hinaus umfasst das Betätigungsmittel 42 ein Gleitelement 56. Dieses umfasst einen mehreckigen Querschnitt.

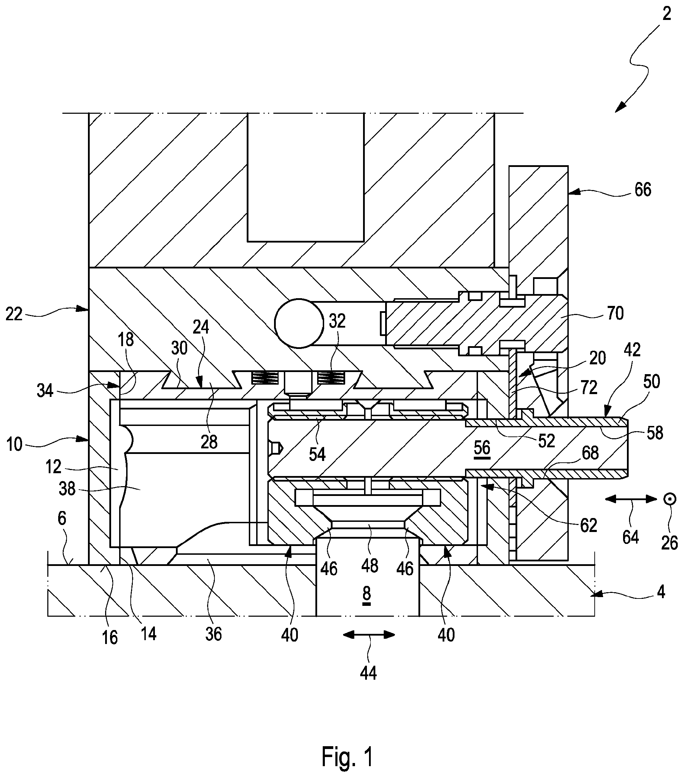

Figur 1 zeigt ein erstes Ausführungsbeispiel der Befestigungseinrichtung 2, bei der das Übertragungselement 54 und das Gleitelement 56 ein gemeinsames einstückiges Bauteil bilden. Das Übertragungselement 54 ist durch einen Außengewindeabschnitt gebildet, der mit einem korrespondierenden, insbesondere komplementären, Innengewindeabschnitt, der zwei Klemmmittel 40 zusammenwirkt.

Das Gleitelement 56 ist innerhalb des Betätigungselements 50 angeordnet. Gleitelement 56 und Betätigungselement 50 des Ausführungsbeispiel gemäß Figur 1 sind separate oder voneinander separierbare Bauteile. Das Gleitelement 56 ist in einer korrespondierend ausgebildeten Ausnehmung im Betätigungselement 50 angeordnet, wodurch eine Drehbewegung des Betätigungselements 50 auf das Gleitelement 56 übertragen wird und zu einer Drehbewegung des einstückig mit dem Gleitelement 56 ausgebildeten Übertragungselements 54 führt. Diese Drehbewegung wird durch das Übertragungselement 54 in eine Translationsbewegung der Klemmmittel 40 aufeinander zu oder voneinander weg bezüglich der Übertragungsrichtung 44 umgewandelt.

Parallel zur Übertragungsrichtung 44 kann das Gleitelement 56 bei dem Ausführungsbeispiel gemäß Figur 1 innerhalb der Ausnehmung 58 im Betätigungselement 50 gleiten.

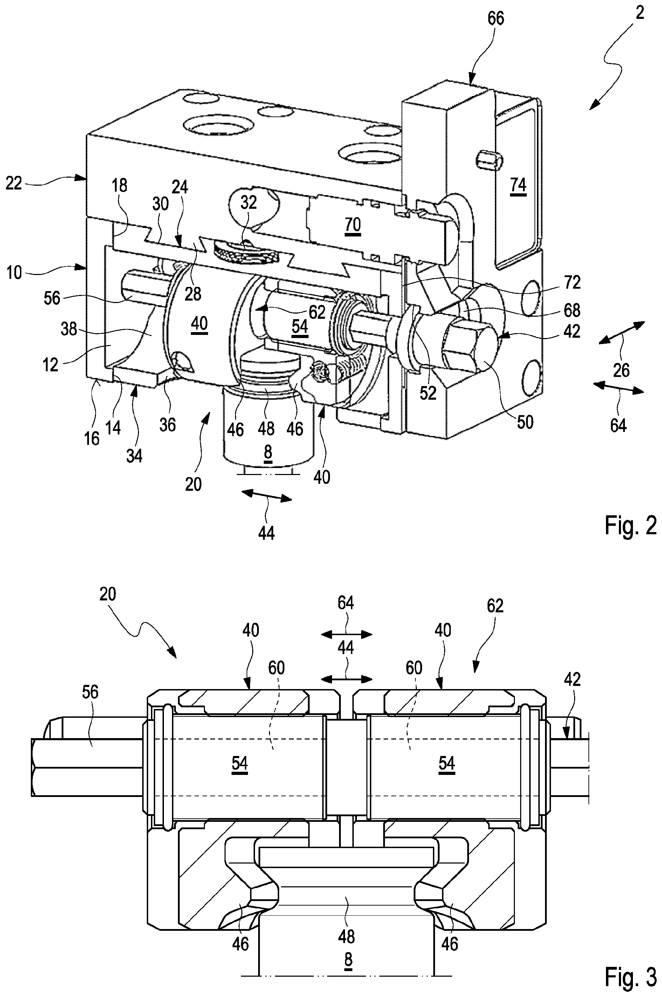

Figuren 2 und 3 zeigen ein zweites Ausführungsbeispiel der Befestigungseinrichtung 2, bei der Betätigungselement 50 und Gleitelement 56 als gemeinsames einstückiges Bauteil ausgebildet sind. Gleitelement 56 und Übertragungselement 54 umfassen zwei separate oder voneinander separierbare Bauteile. Das Gleitelement 56 ist in einer durchgehenden Ausnehmung 60 in den jeweiligen Übertragungselementen 54 angeordnet. Die Übertragungselemente 54 umfassen solchenfalls als separate oder separierbare Bauteile, einen Außengewindeabschnitt, der korrespondierend, insbesondere komplementär zu einem Innengewindeabschnitt der beiden Klemmmittel 40 ausgebildet ist.

Beiden Ausführungsbeispielen der Figuren 1, 2 und 3 ist gemein, dass zwischen Gleitelement 56 und den zwei Klemmmitteln 40 eine zweite Führungseinheit 62 gebildet ist, durch die die mindestens zwei Klemmmittel 40 zumindest in der Freigabestellung parallel zur Betätigungsrichtung im Gehäusekörper 34 entlang einer zweiten Führungsrichtung 64 bewegbar sind.

Darüber hinaus ist beiden Ausführungsformen gemein, dass die Befestigungseinrichtung 2 ein plattenartiges Wandelement 66 umfasst, das an der der Durchbrechung 52 im Rahmenmittel 10 am Rahmenmittel 10 und am Deckelmittel 22 festgelegt ist und das eine durchgehende Wandöffnung 68 umfasst, die mit der Durchbrechung 52 im Rahmenmittel 10 fluchtet und die das Betätigungselement 50 des Betätigungsmittels 42 hindurcherstreckt und von außen betätigbar ist.

Darüber hinaus umfasst die Befestigungseinrichtung 2 ein bolzen- oder schraubenartiges Ausrichtemittel 70, das im Deckelmittel 22 festgelegt ist, das in der Wandöffnung 68 oder durch die Wandöffnung 68 nach außen erstreckt ist und durch das eine Null-Lage der Festlegeeinheit 20 einstellbar ist. Darüber hinaus ist zwischen Rahmenmittel 10 sowie daran angeordnetem Deckelmittel 22 einerseits und dem Wandelement 66 andererseits, ein scheibenförmiges Verschlussmittel 72 vorgesehen, durch dass das Betätigungselement 50 durch eine korrespondierend, insbesondere komplementär, ausgebildete Verschlusselementöffnung, das die Wandöffnung 68 des Wandelements 66 und die Durchbrechung 52 des Rahmenmittels 10 in Gänze verdeckt und das schwimmend um das Ausrichtemittel 70 drehbar gelagert ist. Das Verschlusselement 72 gibt das Betätigungselement 50 zumindest zum Bewegen entlang der ersten Führungsrichtung 26 innerhalb der Durchbrechung 52 und der Wandöffnung 68 frei.

Darüber hinaus umfassen beide Ausführungsformen der Befestigungseinrichtung 2 eine Elektronikelementaufnahme 74, in der oder an der ein Elektronikelement, wie Datenträger, Sensor, Chip, insbesondere RFID-Chip, anordenbar ist.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Befestigungseinrichtung
- 4: Ablageeinrichtung
- 6: Ablagefläche
- 8: Haltebolzen
- 10: Rahmenmittel
- 12: Hohlraum
- 14: Öffnung
- 16: Anlagefläche
- 18: Aussparung
- 20: Festlegeeinheit
- 22: Deckelmittel
- 24: erste Führungseinheit
- 26: erste Führungsrichtung
- 28: Vorsprung
- 30: Vertiefung
- 32: Spannmittel
- 34: Gehäusekörper
- 36: Gehäuseöffnung
- 38: Gehäusehohlraum
- 40: Klemmmittel
- 42: Betätigungsmittel
- 44: Betätigungsrichtung
- 46: Spannabschnitt
- 48: Hintergriffabschnitt
- 50: Betätigungselement
- 52: Durchbrechung
- 54: Übertragungselement
- 56: Gleitelement
- 58: Ausnehmung im Betätigungselement
- 60: Ausnehmung im Übertragungselement
- 62: zweite Führungseinheit
- 64: zweite Führungsrichtung
- 66: Wandelement
- 68: Wandöffnung
- 70: Ausrichtemittel
- 72: Verschlusselement
- 74: Elektronikelementaufnahme

## Patentansprüche

1. Befestigungseinrichtung (2) für eine Befestigungsvorrichtung zum Festlegen eines Ablagekörpers an einer Ablageeinrichtung (4), die eine Ablagefläche (6) und mindestens einen aus der Ablagefläche (6) hervorragenden Haltebolzen (8) aufweist, mit mindestens einem gehäuseartigen Rahmenmittel (10), das einen Hohlraum (12), das eine Öffnung (14), durch die der Hohlraum (12) von außen zugänglich ist, das eine Anlagefläche (16), mit der das Rahmenmittel (10) an der Ablagefläche (6) der Ablageeinrichtung (4) berührend anordenbar ist, und das auf der der Öffnung (14) gegenüberliegenden Seite eine durchgehende Aussparung (18) umfasst, durch die der Hohlraum (12) von außen zugänglich ist, mit mindestens einer im Hohlraum (12) angeordneten Festlegeeinheit (20), durch die ein durch die Öffnung (14) erstreckter, im Hohlraum (12) des Rahmenmittels (10) angeordneter Haltebolzen (8) relativ zum Rahmenmittel (10) ortsfest festlegbar ist, mit mindestens einem Deckelmittel (22), das auf der der Öffnung (14) abgewandten Seite des Rahmenmittels (10) die Aussparung (18) verschließend am Rahmenmittel (10) festgelegt ist, **dadurch gekennzeichnet, dass** die Befestigungseinrichtung (2) mindestens eine erste Führungseinheit (24) aufweist, die zwischen dem Deckelmittel (22) und der Festlegeeinheit (20) ausgebildet ist und durch die die Festlegeeinheit (20) parallel zur Anlagefläche (16) im Hohlraum (12) des Rahmenmittels (10) entlang einer ersten Führungsrichtung (26) bewegbar ist.

2. Befestigungseinrichtung (2) nach Anspruch 1, **dadurch gekennzeichnet, dass** die erste Führungseinheit (24) mindestens einen Vorsprung (28) am Deckelmittel (22) oder an der Festlegeeinheit (20) umfasst, der quer zur ersten Führungsrichtung (26) einen sich erweiternden Querschnitt umfasst und der in eine korrespondierend, insbesondere komplementär, ausgebildete nutartige Vertiefung (30) der Festlegeeinheit (20), bzw. des Deckelmittels (22) eingreift.

3. Befestigungseinrichtung (2) nach Anspruch 1 oder 2, **dadurch gekennzeichnet, dass** die erste Führungseinheit (24) mindestens ein Spannmittel (32) umfasst, das zwischen Deckelmittel (22) und Festlegeeinheit (20) angeordnet ist und durch das Deckelmittel (22) und Festlegeeinheit (20) voneinander weg spannbar sind.

4. Befestigungseinrichtung (2) nach einem der vorhergehenden Ansprüche, **dadurch gekennzeichnet, dass** die Festlegeeinheit (20) einen Gehäusekörper (34) umfasst, an dessen dem Deckelmittel (22) zugewandten Seite die erste Führungseinheit (24), insbesondere die nutartige Vertiefung (30), bzw. der Vorsprung (28), ausgebildet ist und der auf der dem Deckelmittel (22) abgewandten Seite eine Gehäuseöffnung (36) aufweist, durch die ein Gehäusehohlraum (38) von außen zugänglich ist.

5. Befestigungseinrichtung (2) nach Anspruch 4, **dadurch gekennzeichnet, dass** die Festlegeeinheit (20) mindestens zwei Klemmmittel (40) und mindestens ein von außerhalb des Rahmenmittels (10) betätigbares Betätigungsmittel (42) umfasst, die im Gehäusehohlraum (38) des Gehäusekörpers (34) angeordnet sind, wobei durch das Betätigungsmittel (42) die mindestens zwei Klemmmittel (40) entlang einer Betätigungsrichtung (44) aufeinander zu oder voneinander weg relativ zueinander bewegbar und von einer Festlegestellung, in der die Klemmmittel (40) einen durch die Öffnung (14) erstreckten, im Hohlraum (12) des Rahmenmittels (10) angeordneten Haltebolzen (8) der Ablageeinrichtung (4) gegen ein Relativbewegen quer zur Betätigungsrichtung (44) festgelegen, in einer Freigabestellung überführbar sind, in der der Haltebolzen (8) zum Bewegen quer oder schräg zur Betätigungsrichtung (44) freigegeben ist.

6. Befestigungseinrichtung (2) nach Anspruch 4 oder 5, **dadurch gekennzeichnet, dass** die Gehäuseöffnung (36) im Gehäusekörper (34) einen sich von außen in Richtung Klemmmittel (40) verjüngenden Querschnitt umfasst, der an seiner engsten Stelle zumindest einen Querschnitt umfasst, der korrespondierend, insbesondere komplementär, zum Querschnitt des Haltebolzens (8) ausgebildet ist.

7. Befestigungseinrichtung (2) nach einem der Ansprüche 4 bis 6, **dadurch gekennzeichnet, dass** mindestens eines der mindestens zwei Klemmmittel (40) einen, insbesondere in, schräg oder quer zur Betätigungsrichtung (44) erstreckten, keilartigen Spannabschnitt (46) umfasst, der in der Festlegestellung in einen korrespondierend, insbesondere komplementär, ausgebildeten Hintergriffabschnitt (48) des Haltebolzens (8) eingreift und der den Haltebolzen (8) beim Betätigen in Betätigungsrichtung (44) quer zur Betätigungsrichtung (44) in Richtung Rahmenmittel (10) spannt und in der Festlegestellung mit dem Haltebolzen (8) einen Hintergriff quer zur Betätigungsrichtung (44) bildet.

8. Befestigungseinrichtung (2) nach einem der Ansprüche 4 bis 7, **dadurch gekennzeichnet, dass** das Betätigungsmittel (42) ein Betätigungselement (50) umfasst, das in Gänze oder zumindest abschnittsweise in Richtung parallel zur Betätigungsrichtung (44) durch eine Durchbrechung (52) im Rahmenmittel (10) aus dem Rahmenmittel (10) herausragt und gegen ein Bewegen parallel zur Betätigungsrichtung (44) festgelegt und von außen um eine parallel zur Betätigungsrichtung (44) verlaufende Drehachse drehbar betätigbar ist und/oder dass das Betätigungsmittel (42) ein Übertragungselement (54) umfasst, das durch die Klemmmittel (40) durcherstreckt ist und durch das eine Drehbewegung des Betätigungselement (50) in eine Translationsbewegung der Klemmmittel (40) wandelbar ist.

9. Befestigungseinrichtung (2) nach Anspruch 8, **dadurch gekennzeichnet, dass** das Betätigungsmittel (42) ein Gleitelement (56) umfasst, mit dem das Betätigungsmittel (42) parallel zur Betätigungsrichtung (44) relativ zum Betätigungselement (50) und/oder mit dem die Klemmmittel (40) relativ zum Betätigungsmittel (42) bewegbar ist, wobei das Gleitelement (56) des Betätigungsmittels (42) und die mindestens zwei Klemmmittel (40) eine zweite Führungseinheit (62) bilden durch die zumindest die mindestens zwei Klemmmittel (40) zumindest in der Freigabestellung parallel quer zur Betätigungsrichtung (44) im Gehäusekörper (34) entlang einer zweiten Führungsrichtung (64) bewegbar sind.

10. Befestigungseinrichtung (2) nach Anspruch 9, **dadurch gekennzeichnet, dass** das Gleitelement (56) quer zur Betätigungsrichtung (44) einen mehreckigen Querschnitt, insbesondere einen viereckigen, sechseckigen oder achteckigen Querschnitt, umfasst und dass das Übertragungselement (54) einen Außengewindeabschnitt und jedes Klemmmittel (40) einen mit dem Außengewindeabschnitt zusammenwirkenden Innengewindeabschnitt umfasst.

11. Befestigungseinrichtung (2) nach Anspruch 10, **dadurch gekennzeichnet, dass** das Betätigungselement (50) und das Gleitelement (56) des Betätigungsmittels (42) ein gemeinsames einstückiges Bauteil bilden und/oder dass das Gleitelement (56) und das mindestens eine Übertragungselement (54) voneinander separate oder separierbare Bauteile umfassen, wobei das Gleitelement (56) mit einem einen mehreckigen Querschnitt umfassenden Gleitabschnitt in einer korrespondierend, insbesondere komplementär, ausgebildeten durchgehenden Ausnehmung im Übertragungselement (60) angeordnet und entlang der zweiten Führungsrichtung (64) relativ zum Übertragungselement (54) bewegbar ist.

12. Befestigungseinrichtung (2) nach Anspruch 10 oder 11, **dadurch gekennzeichnet, dass** das Betätigungselement (50) und das Gleitelement (56) des Betätigungsmittels (42) voneinander separate oder separierbare Bauteile umfassen, wobei das Gleitelement (56) mit einem einen mehreckigen Querschnitt umfassenden Gleitabschnitt in einer korrespondierend, insbesondere komplementär, ausgebildeten durchgehenden Ausnehmung im Betätigungselement (58) angeordnet und entlang der zweiten Führungsrichtung (64) relativ zum Betätigungselement (50) bewegbar ist und/oder dass das Gleitelement (56) und das mindestens eine Übertragungselement (54) ein gemeinsames Bauteil bilden.

13. Befestigungseinrichtung (2) nach einem der Ansprüche 8 bis 12, **gekennzeichnet durch** mindestens ein plattenartiges Wandelement (66), das auf der die Durchbrechung (52) umfassenden Seite des Rahmenmittels (10) am Rahmenmittel (10) und am Deckelmittel (22) festgelegt ist und das eine durchgehende Wandöffnung (68) umfasst, die mit der Durchbrechung (52) im Rahmenmittel (10) fluchtet und die durch das Betätigungselement (50) des Betätigungsmittels (42) hindurcherstreckt und von außen betätigbar ist.

14. Befestigungseinrichtung (2) nach Anspruch 13, **gekennzeichnet durch** ein bolzen- oder schraubenförmiges Ausrichtemittel (70), das im Deckelmittel (22) festgelegt ist, das in der Wandöffnung (68) oder durch die Wandöffnung (68) nach außen erstreckt ist und durch das eine Null-Lage der Festlegeeinheit (20) einstellbar ist, und durch ein scheibenförmiges Verschlusselement (72) durch das das Betätigungselement (50) durch eine korrespondierend, insbesondere komplementär, ausgebildete Verschlusselementöffnung durcherstreckt ist, das die Wandöffnung (68) des Wandelements (66) und die Durchbrechung (52) des Rahmenmittels (10) in Gänze verdeckt, und das schwimmend um das Ausrichtemittel (70) drehbar gelagert ist und ein zumindest Bewegen des Betätigungselements (50) entlang der ersten Führungsrichtung (26) freigibt.

15. Befestigungseinrichtung (2) nach Anspruch 13 oder 14, durch gekennzeichnet, dass das Wandelement (66) mindestens eine Elektronikelementaufnahme (74) umfasst, in der oder an der ein Elektronikelement, wie Datenträger, Sensor, Chip, insbesondere RFID-Chip, anordenbar ist.

## Claims

1. Fastening device (2) for a fastening apparatus to fix a storage body to a storage device (4), which has a storage surface (6) and at least one retaining bolt (8) protruding from the storage surface (6), with at least one housing-like frame means (10), comprising a cavity (12), which has an opening (14) through which the cavity (12) is accessible from the outside, which has a contact surface (16) with which the frame means (10) can be arranged in contact with the storage surface (6) of the storage device (4) and which comprises a continuous recess (18) on the side opposite the opening (14), through which the cavity (12) is accessible from the outside with at least one fixing unit (20) arranged in the cavity (12), by means of which a retaining bolt (8) extended through the opening (14) and is arranged in the cavity (12) of the frame means (10) can be fixed in position relative to the frame means (10) with at least one cover means (22), which is secured to the frame means (10) on the side of the frame means (10) facing away from the opening (14) and closes the recess (18), **characterised in that** the fastening device (2) comprises at least a first guiding unit (24) formed between the cover means (22) and the fixing unit (20), through which the fixing unit (20) is movable parallel to the contact surface (16) within the cavity (12) of the frame means (10) along a first guide direction (26).

2. Fastening device (2) according to claim 1, **characterised by** the fact that the first guiding unit (24) comprises at least one projection (28) on the cover means (22) or on the fixing unit (20), which comprises an expanding cross-section transverse to the first guiding direction (26) and which engages in a corresponding, in particular complementary, formed groove-like depression (30) of the fixing unit (20) or cover means (22).

3. Fastening device (2) according to claim 1 or 2, **characterised by** the fact that the first guiding unit (24) comprises at least one tensioning device (32), which is arranged between the cover means (22) and fixing unit (20) and can be tensioned away from each other by the cover means (22) and fixing unit (20).

4. Fastening device (2) according to any one of the preceding claims, **characterised by** the fact that the fixing unit (20) comprises a housing body (34), on whose side facing the cover means (22) the first guiding unit (24), in particular the groove-like depression (30), or the projection (28), is formed and the side facing away from the cover (22) has a housing opening (36) through which a housing cavity (38) is accessible from the outside.

5. Fastening device (2) according to claim 4, **characterised by** the fact that the fixing unit (20) comprises at least two clamping means (40) and at least one actuating means (42) which can be actuated from outside the frame means (10), which are arranged in the housing cavity (38) of the housing body (34), wherein the at least two clamping means (40) can be moved towards or away from one another relative to one another along an actuating direction (44) by the actuating means (42) and from a fixed position, in which the clamping means (40) secure a retaining bolt (8) of the storage device (4), which bolt extends through the opening (14) and is arranged in the cavity (12) of the frame means (10), against relative movement transversely to the actuating direction (44), and can be transferred into a release position in which the retaining bolt (8) is released for movement transversely or diagonally to the actuating direction (44).

6. Fastening device (2) according to claim 4 or 5, **characterised by** the fact that the housing opening (36) in the housing body (34) comprises a cross-section tapering from the outside in the direction of the clamping means (40), which comprises at its narrowest point at least one cross-section which is formed correspondingly, in particular complementarily, to the cross-section of the retaining bolt (8).

7. Fastening device (2) according to claim 4 to 6, **characterised by** the fact that at least one of the at least two clamping devices (40) may comprise a wedge-like tensioning section (46), in particular in, obliquely or transversely to the actuating direction (44), which engages in the fixed position in a corresponding, in particular complementarily, formed rear grip section (48) of the retaining bolt (8) and which puts tension on the retaining bolt (8) when actuating in the actuating direction (44) transversely to the actuating direction (44) in the direction of the frame means (10) and forms a rear grip with the retaining bolt (8) transversely to the actuating direction (44).

8. Fastening device (2) according to claim 4 to 7, **characterised by** the fact that the actuating means (42) comprises an actuating element (50) which protrudes in whole or at least in part in the direction parallel to the actuating direction (44) from the frame means (10) through a penetration (52) in the frame means (10) and is fixed against moving parallel to the actuating direction (44) and can be rotationally actuated from the outside about a rotational axis parallel to the actuating direction (44) and/or that the actuating means (42) comprises a transmission element (54) which is extended through the clamping means (40) and by which a rotational movement of the actuating element (50) can be converted into a translational movement of the clamping means (40).

9. Fastening device (2) according to claim 8, **characterised by** the fact that the actuating means (42) comprises a sliding element (56) with which the actuating device (42) can be moved parallel to the actuating direction (44) relative to the actuating element (50) and/or with which the clamping means (40) can be moved relative to the actuating means (42), wherein the sliding element (56) of the actuating means (42) and the at least two clamping means (40) form a second guiding unit (62) through the at least two clamping means (40) and can be moved parallel transversely to the actuating direction (44) in the housing body (34) along a second guiding direction (64).

10. Fastening device (2) according to claim 9, **characterised by** the fact that the sliding element (56) transverse to the actuating direction (44) comprises a polygonal cross-section, in particular a square, hexagonal or octagonal cross-section, and if the transmission element (54) comprises an externally threaded section and each clamping means (40) comprises an internally threaded section acting together with the externally threaded section.

11. Fastening device (2) according to claim 10, **characterised by** the fact that the actuating element (50) and the sliding element (56) of the actuating means (42) form a common single-piece component and/or if the sliding element (56) and the at least one transmission element (54) comprise components that are separate or separable from one another, wherein the sliding element (56) has a sliding section comprising a polygonal cross-section in a corresponding, in particular complementary, continuous recess in the transmission element (60) and is movable along the second guiding direction (64) relative to the transmission element (54).

12. Fastening device (2) according to claim 10 or 11, **characterised by** the fact that the actuating element (50) and the sliding element (56) of the actuating means (42) comprise components that are separate or separable from one another, wherein the sliding element (56) is arranged with a sliding section having a polygonal cross-section within a corresponding, and in particular complementary, continuous recess in the actuating element (58) and is movable along the second guide direction (64) relative to the actuating element (50) and/or that the sliding element (56) and at least one transmission element (54) form a common component

13. Fastening device (2) according to claim 8 to 12, **characterised by** at least one panel-like wall element (66) which is fixed to the frame means(10) and the cover means (22) on the side of the frame means (10) that encloses the penetration (52)and which comprises a continuous wall opening (68) which is aligned with the penetration (52) in the frame means (10) and through which the actuating element (50) of the actuating means (42) extends and can be actuated from the outside.

14. Fastening device (2) according to claim 13, **characterised by** the fact that a bolt or screw-shaped alignment means (70) which is fixed in the cover means (22) which extends outwards in the wall opening (68) or through the wall opening (68) and by which a neutral position of the fixing unit (20) can be set, and by a disc-shaped locking element (72) through which the actuating element (50) is extended through a corresponding, in particular complementary, locking element opening that conceals the wall opening (68) of the wall element (66) and the penetration (52) of the frame means (10), and which is mounted to rotate freely about the alignment means (70) and enables, at least, movement of the actuating element (50) along the first guiding direction (26).

15. Fastening device (2) according to claim 13 or 14, **characterised by** the fact that the wall element (66) comprises at least one electronic element holder (74), in or on which an electronic element, such as a data carrier, sensor, chip, in particular an RFID chip, can be arranged.

## Revendications

1. Dispositif de fixation (2) destiné à un appareil de fixation permettant de maintenir un objet à poser sur un dispositif de rangement (4), qui présente une surface de rangement (6) et au moins un goujon de retenue (8) faisant saillie de la surface de rangement (6), comprenant au moins un élément de cadre (10) en forme de boîtier, qui présente une cavité (12) et une ouverture (14), par laquelle la cavité (12) est accessible de l'extérieur, une surface d'appui (16) permettant de positionner l'élément de cadre (10) en contact avec la surface de rangement (6) du dispositif de rangement (4), et qui comprend, sur le côté opposé à l'ouverture (14), une encoche (18) traversante par laquelle la cavité (12) est accessible de l'extérieur, avec au moins une unité de fixation (20) disposée dans la cavité (12), grâce à laquelle un goujon de retenue (8) s'étendant à travers l'ouverture (14) et disposé dans la cavité (12) de l'élément de cadre (10) peut être fixé de manière fixe par rapport à l'élément de cadre (10), avec au moins un élément de couvercle (22) qui est fixé sur l'élément de cadre (10) du côté opposé à l'ouverture (14), en obturant l'encoche (18) sur l'élément de cadre (10), **caractérisé en ce que** le dispositif de fixation (2) comporte au moins une première unité de guidage (24) qui est formée entre l'élément de couvercle (22) et l'unité de fixation (20) et à travers laquelle l'unité de fixation (20) est mobile parallèlement à la surface d'appui (16) dans la cavité (12) de l'élément de cadre (10) le long d'une première direction de guidage (26).

2. Dispositif de fixation (2) selon la revendication 1, **caractérisé en ce que** la première unité de guidage (24) comprend au moins une saillie (28) sur l'élément de couvercle (22) ou sur l'unité de fixation (20), qui présente une section transversale s'élargissant transversalement à la première direction de guidage (26) et qui s'engage, de manière à correspondre, en particulier de manière complémentaire dans un renfoncement en forme de rainure (30) de l'unité de fixation (20) ou de l'élément de couvercle (22).

3. Dispositif de fixation (2) selon la revendication 1 ou 2, **caractérisé en ce que** la première unité de guidage (24) comprend au moins un moyen de serrage (32) qui est disposé entre l'élément de couvercle (22) et l'unité de fixation (20) et grâce auquel l'élément de couvercle (22) et l'unité de fixation (20) peuvent être écartés l'un de l'autre.

4. Dispositif de fixation (2) selon l'une des revendications précédentes, **caractérisé en ce que** l'unité de fixation (20) comprend un corps de boîtier (34) sur le côté duquel, tourné vers l'élément de couvercle (22), est formée la première unité de guidage (24), en particulier le renfoncement en forme de rainure (30) ou la saillie (28), et qui présente, sur le côté opposé à l'élément de couvercle (22), une ouverture de boîtier (36) à travers laquelle une cavité de boîtier (38) est accessible depuis l'extérieur.

5. Dispositif de fixation (2) selon la revendication 4, **caractérisé en ce que** l'unité de fixation (20) comprend au moins deux moyens de serrage (40) et au moins un moyen d'actionnement (42) pouvant être actionné depuis l'extérieur de l'élément de cadre (10), qui sont disposés dans la cavité du boîtier (38) du corps de boîtier (34), le moyen d'actionnement (42) permettant de déplacer les au moins deux moyens de serrage (40) l'un vers l'autre ou l'un loin de l'autre le long d'une direction d'actionnement (44) et de les immobiliser, à partir d'une position de fixation dans laquelle les moyens de serrage (40) immobilisent un goujon de retenue (8) du dispositif de rangement (4) s'étendant à travers l'ouverture (14) et disposé dans la cavité (12) de l'élément de cadre (10) contre un déplacement relatif transversalement à la direction d'actionnement (44), vers une position de libération dans laquelle le goujon de retenue (8) est libéré pour se déplacer transversalement ou obliquement par rapport à la direction d'actionnement (44).

6. Dispositif de fixation (2) selon la revendication 4 ou 5, **caractérisé en ce que** l'ouverture du boîtier (36) dans le corps du boîtier (34) présente une section transversale se rétrécissant de l'extérieur vers le moyen de serrage (40), laquelle, en son point le plus étroit, présente au moins une section transversale qui est conçue de manière à correspondre, en particulier de manière complémentaire, à la section transversale du goujon de retenue (8).

7. Dispositif de fixation (2) selon l'une des revendications 4 à 6, **caractérisé en ce qu'**au moins l'un des au moins deux moyens de serrage (40) comprend une section de serrage (46) en forme de coin, s'étendant notamment en oblique ou transversalement par rapport à la direction d'actionnement (44), qui, en position de fixation, s'engage de manière à correspondre, en particulier de manière complémentaire, dans une section d'accrochage (48) arrière du goujon de retenue (8) et qui, lors de l'actionnement dans la direction d'actionnement (44), serre le goujon de retenue (8) transversalement à la direction d'actionnement (44) en direction de l'élément de cadre (10) et forme, en position de fixation, avec le goujon de retenue (8), une prise arrière transversale à la direction d'actionnement (44).

8. Dispositif de fixation (2) selon l'une des revendications 4 à 7, **caractérisé en ce que** le moyen d'actionnement (42) comprend un élément d'actionnement (50) qui dépasse l'élément de cadre (10), en totalité ou au moins par sections, dans une direction parallèle à la direction d'actionnement (44) à travers une ouverture (52) pratiquée dans l'élément de cadre (10) et est immobilisé contre tout déplacement parallèle à la direction d'actionnement (44) et peut être actionné de l'extérieur de manière rotative autour d'un axe de rotation s'étendant parallèlement à la direction d'actionnement (44) et/ou **en ce que** le moyen d'actionnement (42) comprend un élément de transmission (54) qui s'étend à travers les moyens de serrage (40) et grâce auquel un mouvement de rotation de l'élément d'actionnement (50) peut être converti en un mouvement de translation des moyens de serrage (40).

9. Dispositif de fixation (2) selon la revendication 8, **caractérisé en ce que** le moyen d'actionnement (42) comprend un élément coulissant (56) avec lequel le moyen d'actionnement (42) est mobile parallèlement à la direction d'actionnement (44) par rapport à l'élément d'actionnement (50) et/ou avec lequel les moyens de serrage (40) sont mobiles par rapport au moyen d'actionnement (42), l'élément coulissant (56) du moyen d'actionnement (42) et les au moins deux moyens de serrage (40) forment une deuxième unité de guidage (62) grâce à laquelle au moins les au moins deux moyens de serrage (40) sont mobiles, au moins dans la position de libération, parallèlement et transversalement à la direction d'actionnement (44) dans le corps de boîtier (34) le long d'une deuxième direction de guidage (64)

10. Dispositif de fixation (2) selon la revendication 9, **caractérisé en ce que** l'élément coulissant (56) comprend une section polygonale, notamment carrée, hexagonale ou octogonale, transversale à la direction d'actionnement (44), et que l'élément de transmission (54) comprend une section filetée extérieure et que chaque moyen de serrage (40) comprend une section filetée intérieure coopérant avec la section filetée extérieure.

11. Dispositif de fixation (2) selon la revendication 10, **caractérisé en ce que** l'élément d'actionnement (50) et l'élément coulissant (56) du moyen d'actionnement (42) forment un composant monobloc commun et/ou que l'élément coulissant (56) et au moins un élément de transmission (54) comprennent des composants séparés ou séparables, dans lequel l'élément coulissant (56) avec une section de glissement comprenant une section transversale polygonale est disposé dans un évidement continu formé de manière correspondante, en particulier complémentaire, dans l'élément de transmission (60) et est mobile le long de la deuxième direction de guidage (64) par rapport à l'élément de transmission (54).

12. Dispositif de fixation (2) selon la revendication 10 ou 11, **caractérisé en ce que** l'élément d'actionnement (50) et l'élément coulissant (56) du moyen d'actionnement (42) comprennent des composants séparés ou séparables, dans lequel l'élément coulissant (56) est disposé avec une section coulissante comprenant une section transversale polygonale dans un évidement continu conçu de manière correspondante, en particulier complémentaire, dans l'élément d'actionnement (58) et est mobile le long de la deuxième direction de guidage (64) par rapport à l'élément d'actionnement (50) et/ou que l'élément coulissant (56) et au moins un élément de transmission (54) forment un composant commun.

13. Dispositif de fixation (2) selon l'une des revendications 8 à 12, **caractérisé en ce qu'**au moins un élément de paroi (66) en forme de plaque qui est fixé sur le côté de l'élément de cadre (10) comprenant l'ouverture (52) sur l'élément de cadre (10) et sur l'élément de couvercle (22) et qui comprend une ouverture de paroi continue (68) alignée avec l'ouverture (52) dans l'élément de cadre (10) et qui s'étend à travers l'élément d'actionnement (50) du dispositif d'actionnement (42) et peut être actionné de l'extérieur.

14. Dispositif de fixation (2) selon la revendication 13, **caractérisé en ce qu'**un moyen d'alignement (70) en forme de boulon ou de vis fixé dans l'élément de couvercle (22), qui s'étend dans l'ouverture de paroi (68) ou vers l'extérieur à travers l'ouverture de paroi (68) et par lequel une position zéro de l'unité de fixation (20) peut être définie, et par un élément de verrouillage (72) en forme de disque à travers lequel l'élément d'actionnement (50) s'étend à travers une ouverture d'élément de verrouillage conçue de manière correspondante, en particulier complémentaire, qui couvre complètement l'ouverture de paroi (68) de l'élément de paroi (66) et l'ouverture (52) de l'élément de cadre (10), et qui est monté de manière rotative flottant autour du moyen d'alignement (70) et permet au moins un mouvement de l'élément d'actionnement (50) le long de la première direction de guidage (26).

15. Dispositif de fixation (2) selon la revendication 13 ou 14, **caractérisé en ce que** l'élément de paroi (66) comprend au moins un logement pour élément électronique (74) dans lequel ou sur lequel un élément électronique, tel qu'un support de données, un capteur, une puce, en particulier une puce RFID, peut être disposé.
